# EUROPEAN PATENT APPLICATION

(11) **EP 4 125 057 A1**
(43) Date of publication of application: **01.02.2023**
(21) Application number: 21188332.7
(22) Date of filing: 28.07.2021
(51) Int. Cl.: G06V 20/52, G06K 9/62

(54) **A SYSTEM FOR AUTOMATED MONITORING AND ACTIONING OF HEALTH RISK MITIGATION**

(71) Applicant: SITA Information Networking Computing Canada Inc, Montreal, Québec H3A 1G1 (CA)
(72) Inventor: LIU, Xiaoxiang, Montreal, Quebec, H3A 1G1 (CA); MOKHAYYERI, Faniya, Montreal, Quebec, H3A 1G1 (CA); ISSON, Jean-Paul, Montreal, Quebec, H3A 1G1 (CA)
(74) Representative: West, Jonathan David

(57) **Abstract**

A method and apparatus are provided for training and using advanced machine learning models, and using computer vision and data science tools to analyse input images and determine metrics associated with individuals present in the imaged scene, such as the physical separation between pairs of individuals and the use of face coverings by individuals. These metrics are then used to determine indexes associated with the imaged scene that can be used for management of the scene's environment and for the automation of activities in response to the indexes by using threshold values.

## Description

This application relates to a method and system for automatically monitoring for the compliance of individuals with certain guidelines for health risk mitigation and implementing responsive actions based on the monitoring. In particular, the present application relates to the monitoring of minimum distances / spacing between individuals and usage of personal protective equipment.

### BACKGROUND OF THE INVENTION

Where public spaces are impacted by contagious pathogens, for example coronaviruses, it is especially important to take steps to limit the spread of disease and this can be improved by targeted actions in response to effective monitoring of the public space.

One of the most effective measures to mitigate the health-related risks in such impacted public spaces (particularly where the pathogens may be spread by airborne transmission) is for individuals, or respective groups of individuals, to maintain a certain minimum distance between each other, which is commonly known as social distancing. Another effective mitigation measure may be for individuals to wear personal protection equipment (PPE), such as face masks or shields.

Management of this situation in a public space requires individuals to adhere to social distancing and PPE usage rules or guidelines set by those managing the public space or a relevant governing authority. While some existing systems may perform counting / estimation of the number or density of people in a given area, the inventors have appreciated that more advanced systems with a higher degree of granularity and tailoring for monitoring and managing the situation and resulting actions would be desirable.

### SUMMARY OF THE INVENTION

The invention is defined in the independent claims to which reference should now be directed. Advantageous features are set out in the dependent claims.

In a first aspect, the present disclosure relates to an apparatus for determining a separation index for targets in an imaged scene. The apparatus comprises one or more machine learning models that are trained on the detection of targets in an imaged scene; an input module configured to receive an image of the imaged scene to be processed; a processor configured to divide the image into a plurality of regions; the processor configured to determine a respective probability that a target is present in each of the plurality of regions by accessing the one or more machine learning models, wherein a region is determined to include a target if the corresponding determined probability is above a threshold probability; the processor configured to determine a representative position associated with each detected target.

The processor is configured to determine a physical separation between each respective pair of targets based on the respective representative positions associated with each detected target of the pair of targets and a scaling factor; to compare each determined physical separation to a separation threshold and to determine a separation index for the imaged scene based on the number of pairs of targets having a physical separation less than the separation threshold. The separation index is then output, by an output module, for display on a user interface.

Advantageously, this aspect of the present disclosure enables the apparatus to non-invasively determine the physical distance between individuals in the imaged scene and create metrics based on this data for output to a user interface.

Optionally, determining the representative position associated with each detected target may comprise determining a position of each target according to the perspective of the image, and then translating this position to the representative position of the detected target according to a birds-eye perspective corresponding to the imaged scene using a transform. This advantageously enables the system to process perspective images that aid improved target identification, but to then translate these identified perspective targets into a top down / birds-eye view for improved distance calculation. This results in a more accurate apparatus. Optionally, the processor may be further configured to determine the transform based on a set of key points in the imaged scene having a known relationship to one another.

Optionally, the one or more machine learning models may comprise a trained convolutional neural network having convolutional layers; and the processor may be configured to determine the respective probability that a target is present in each of the plurality of regions by accessing the trained convolutional neural network.

Optionally, the processor may be configured to determine a separation index comprising one or more of: a number of targets having an associated physical separation that is less than the separation threshold, a percentage of the detected targets having an associated physical separation that is less than the separation threshold, a number of targets having an associated physical separation that is less than the separation threshold as a function of the total area of the imaged scene, a percentage of the image corresponding to detected targets having an associated physical separation that is less than the separation threshold, a total number of detected targets, or a density of targets in the area of the imaged scene.

Optionally, the image may correspond to a moment in time, the input module may be configured to receive a plurality of further images corresponding to subsequent moments in time, and one or more of the separation indexes may be averaged over a plurality of images corresponding to a moving time window. This advantageously improves the utility of the index by averaging out instantaneous fluctuations.

Optionally, the processor may be further configured to determine whether a given pair of detected targets has an associated physical separation that is less than the separation threshold for more than a threshold time period and, if so, to identify the given pair of detected targets as a target group. The separation index would then not be based on the physical separation between respective targets of a single target group. This advantageously enables the system to identify pairs of individuals that would not be expected to be distanced from each other and the exclude the corresponding distances from the indexes, which would otherwise be distorted by these results.

Optionally, the input module may be configured to receive images of a plurality of different imaged scenes; the processor may be configured to determine a separation index for each of the different imaged scenes; and the processor may be configured to determine a global separation index based on a weighted average of the separation indices for each of the different imaged scenes. In this manner, larger areas can be effectively monitored and managed based on the resulting global indexes.

Optionally, the targets may be people in the imaged scene; and the output module may be further configured to cause routing guidance messages to be displayed to people in, or heading towards, the imaged scene in order to reduce congestion in the imaged scene, with the routing guidance depending on the determined separation index. This advantageously enables the apparatus to alter the configuration of the environment to reduce the congestion in the scene, which can be continuously monitored in a feedback loop.

In a second aspect, the present disclosure relates to a computer implemented method for determining a separation index for targets in an imaged scene. The method comprises receiving, at an input module, an image of an imaged scene to be processed; dividing, by a processor, the image into a plurality of regions; and determining, by the processor, a respective probability that a target is present in each of the plurality of regions by accessing one or more machine learning models that are trained on the detection of targets in an imaged scene. A region is determined to include a target if the corresponding determined probability is above a threshold probability.

The method further determines, using the processor, a representative position associated with each detected target and a physical separation between each respective pair of targets based on the respective representative positions associated with each detected target of the pair of targets and a scaling factor; compares each determined physical separation to a separation threshold; determines a separation index for the imaged scene based on the number of pairs of targets having a physical separation less than the separation threshold; and then an output module outputs the separation index for display on a user interface.

Advantageously, this aspect of the present disclosure enables the apparatus to non-invasively determine the physical distance between individuals in the imaged scene and create metrics based on this data for output to a user interface.

Optionally, determining the representative position associated with each detected target may comprise determining a position of each target according to the perspective of the image, and translating this position to the representative position of the detected target according to a birds-eye perspective corresponding to the imaged scene using a transform. This advantageously enables the system to process perspective images that aid improved target identification, but to then translate these identified perspective targets into a top down / birds-eye view for improved distance calculation. This results in a more efficient and more accurate apparatus. Optionally, the processor may determine the transform based on a set of key points in the imaged scene having a known relationship to one another.

Optionally, the one or more machine learning models may comprise a trained convolutional neural network having convolutional layers; and the method may comprise determining the respective probability that a target is present in each of the plurality of regions by accessing the trained convolutional neural network.

Optionally, the method may further comprise determining, by the processor, a separation index comprising one or more of: a number of targets having an associated physical separation that is less than the separation threshold, a percentage of the detected targets having an associated physical separation that is less than the separation threshold, a number of targets having an associated physical separation that is less than the separation threshold as a function of the total area of the imaged scene, a percentage of the image corresponding to detected targets having an associated physical separation that is less than the separation threshold, a total number of detected targets, or a density of targets in the area of the imaged scene.

Optionally, the image may correspond to a moment in time, the input module may be configured to receive a plurality of further images corresponding to subsequent moments in time; and one or more of the separation indexes may be averaged over a plurality of images corresponding to a moving time window. This advantageously improves the utility of the index by averaging out instantaneous fluctuations.

Optionally, the method may further comprise determining, by the processor, whether a given pair of detected targets has an associated physical separation that is less than the separation threshold for more than a threshold time period and, if so, identifying the given pair of detected targets as a target group. The separation index would then not be based on the physical separation between respective targets of a single target group. This advantageously enables the system to identify pairs of individuals that would not be expected to be distanced from each other and the exclude the corresponding distances from the indexes, which would otherwise be distorted by these results.

Optionally, the input module may be configured to receive images of a plurality of different imaged scenes; and the method may further comprise determining, by the processor, a separation index for each of the different imaged scenes and a global separation index based on a weighted average of the separation indices for each of the different imaged scenes. In this manner, larger areas can be effectively monitored and managed based on the resulting global indexes.

Optionally, the targets may be people in the imaged scene; and the method may further comprise causing, by the output module, routing guidance messages to be displayed to people in, or heading towards, the imaged scene in order to reduce congestion in the imaged scene, wherein the routing guidance depends on the determined separation index. This advantageously enables the apparatus to alter the configuration of the environment to reduce the congestion in the scene, which can be continuously monitored in a feedback loop.

In a third aspect, the present disclosure relates to a computer implemented method for training one or more machine learning models, comprising an artificial neural network, to detect targets in an imaged scene. The method comprises: receiving a plurality of images of targets in imaged scenes; accessing a pre-trained machine learning model that is trained on the detection of targets in an imaged scene using a first set of images; and then replacing the output layer of the pre-trained model architecture with an output layer having a size and number of categories that is equal to the pre-trained model to create a second machine learning model.

The model parameters for the output layer of the second machine learning model are then randomly initialised; and the second machine learning model is fine-tuned by training it using a second set of images. The second set of images are a set of images of the imaged scene, and the first set of images are a set of images of a different scene, e.g. a generic scene. This advantageously provides a machine learning model training method that is quick and efficient to complete, but that can still be specialised to the scenes and environment that the apparatus to use the machine learning model will be implemented in. Optionally, the output layer of the model architecture may be a fully convolutional layer.

In a fourth aspect, the present disclosure relates to an apparatus for determining a user face covering index for targets in an imaged scene. The apparatus comprises: one or more machine learning models that are trained on the detection of a facial region of interest in an imaged scene; one or more further machine learning models that are trained on the binary classification of a user face covering status of targets in an imaged scene; and an input module configured to receive an image of the imaged scene to be processed.

The apparatus further comprises a processor configured to detect a face in the imaged scene and to extract one or more regions of interest from the detected face by applying the one or more machine learning models. The processor is further configured to apply a binary classifier to each facial region of interest to determine the presence or absence of a face covering by applying the one or more further machine learning models to the facial region of interest of the received image, and configured to determine a face covering index for the imaged scene based on the number of targets classified with the presence of a face covering. The apparatus further comprises an output module configured to output the face covering index for display on a user interface. Advantageously, this aspect of the present disclosure enables the apparatus to non-invasively determine the face covering wearing status of individuals in the imaged scene and create metrics based on this data for output to a user interface.

Optionally, the face covering index may correspond to a percentage of targets in the imaged scene classified with the presence of a face covering.

In a fifth aspect, the present disclosure relates to a computer implemented method for determining a user face covering index for targets in an imaged scene. The method comprises: receiving, at an input module, an image of the imaged scene to be processed; detecting, by a processor, a face in the imaged scene and extracting one or more regions of interest from the detected face by applying one or more machine learning models that are trained on the detection of a facial region of interest in an imaged scene. The processor then determines the presence or absence of a face covering by applying a binary classifier to each facial region of interest, the binary classifier using one or more further machine learning models that are trained on the binary classification of a user face covering status of targets in an imaged scene through supervised machine learning.

The processor then determines a face covering index for the imaged scene based on the number of targets classified with the presence of a face covering; and outputs the face covering index from an output module for display on a user interface. Advantageously, this aspect of the present disclosure enables the apparatus to non-invasively determine the face covering wearing status of individuals in the imaged scene and create metrics based on this data for output to a user interface.

Optionally, the face covering index may correspond to a percentage of targets in the imaged scene classified with the presence of a face covering.

In a sixth aspect, the present disclosure relates to a computer implemented method for training one or more machine learning models, comprising an artificial neural network, to classify the presence or absence of a face covering on faces in an imaged scene. The method comprises: receiving a set of images including faces in imaged scenes, the set of images including a plurality of faces labelled with the presence or absence of a face covering; and then augmenting the set of images to digitally add a face covering to a subset of the targets that are labelled with the absence of a face.

The method augments the imaged by: generating a synthetic face covering using a generative adversarial network; detecting a face in the set of images and extracting one or more facial key points from the detected face by applying one or more machine learning models that are trained on the detection of faces and facial key points; overlaying the synthetic face covering on the detected face and aligning the synthetic face covering with the detected facial key points; and then labelling the overlaid face with the presence of a face covering. The one or more machine learning models are then trained on the labelled set of images including the augmented images. This advantageously enables the method to enrich the training data set to provide a more balanced distribution of face covering wearing / absence status'.

### BRIEF DESCRIPTION OF THE DRAWINGS

Embodiments of the invention will now be described, by way of example only, and with reference to the accompanying drawings, in which:
Figure 1 is a block diagram illustrating an apparatus for implementing the aspects of the present disclosure;
Figure 2 is a flowchart illustrating a method for determining a separation index for targets in an imaged scene according to the present disclosure;
Figure 3 is a flowchart illustrating a method for training one or more machine learning models to detect targets in an imaged scene according to the present disclosure;
Figure 4 is a flowchart illustrating a method for training one or more machine learning models to classify the presence or absence of a face covering on faces in an imaged scene according to the present disclosure;
Figure 5 is a flowchart illustrating a method for determining a user face covering index for targets in an imaged scene according to the present disclosure;
Figure 6 is a schematic diagram of the epidemiological model according to the present disclosure; and
Figure 7 is a schematic diagram of a multi-airport level risk assessment model according to the present disclosure.

### DETAILED DESCRIPTION

The present invention employs advanced machine learning, computer vision and data science to analyse streams of real time images from cameras or other image sensors directed to an area of space to be monitored. Once this monitoring has been achieved, indexes detected by the computer vision can be used to control automated processes and alerting relevant to the monitored area of space. The invention is particularly applicable to the monitoring of public spaces that may be managed by a service provider; however, the skilled person will appreciate that the following teaching may equally be applied to areas controlled by companies or individuals.

By using these techniques, the invention is able to non-invasively identify metrics such as the distance between individuals, or between respective groups of individuals, corresponding people densities and to identify whether individuals are wearing personal protective equipment (PPE), such as face masks. It is envisaged that the system and method of the present invention would be beneficial in all public spaces, including but not limited to shopping centres, cruise ships, transportation hubs (for example train stations or airports), and transport vehicles (for example trains and aircraft).

The following description will consider the use case of an airport, but the invention is not limited to such a use case as noted above. In an airport, multiple cameras may be set up to monitor various public or restricted access / secure areas, typically closed-circuit television (CCTV) cameras will already be present in the infrastructure of the relevant areas of an airport and so these camera feeds may be ingested into the system of the invention for processing using the camera vision and machine learning techniques. It will be appreciated that any means of ingestion may be used and that various formats or encoding may be used for the data transmission, with transcoding being implemented where necessary. The means of ingestion will preferably be automated and continuous (for example via secure cloud storage), but manual uploading of data to the system from local storage media may also be performed where automated and continuous uploading and ingestion is not possible.

For the purposes of the computer vision techniques, the camera views to be ingested are preferably those where there is full body visibility of the individuals to be monitored, and more preferably at an angle from which it could be expected to image the front of the individual to be monitored for a significant portion of the time. In the context of an airport, one group of individuals to be monitored may be passengers and cameras may be positioned facing passengers along walkways, for example corridors leading to aircraft gates etc. such that the passengers are expected to be walking towards the cameras to reach the aircraft gate.

### Physical Distance Measurement

The advanced machine learning, computer vision and data science tools of the present invention may be applied to the measurement of the physical distance between individuals depicted in input images. This is particularly beneficial in situations where rules or guidelines may be in place that specify a certain minimum separation distance between individuals, for example to reduce the risk of airborne transmission of infectious pathogens. It will be appreciated that the specific minimum distance may be variable depending on the specifics of the transmission mechanism for a given pathogen and that the physical distance between individuals measured by the system and apparatus may be compared to / interpreted in the context of any given minimum distancing.

An advantage of the apparatus is that it is designed to be able to be implemented with the existing image sensor infrastructure in the airport or other area to be monitored. One aspect of this is that the images input into the apparatus will typically be a perspective view of the passengers or other individuals for which the apparatus is attempting to measure the physical distance between, as is common in CCTV and other camera monitoring arrangements.

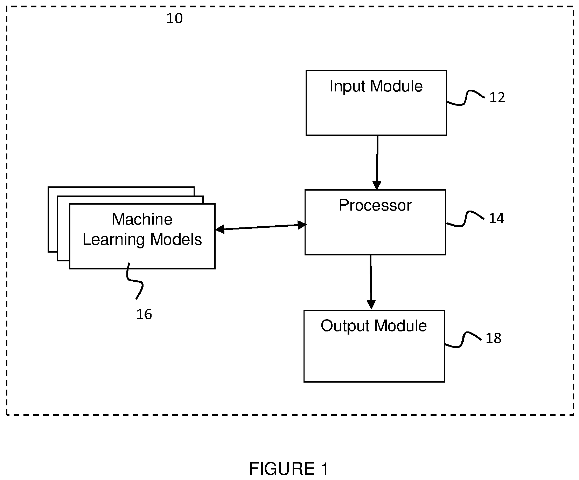

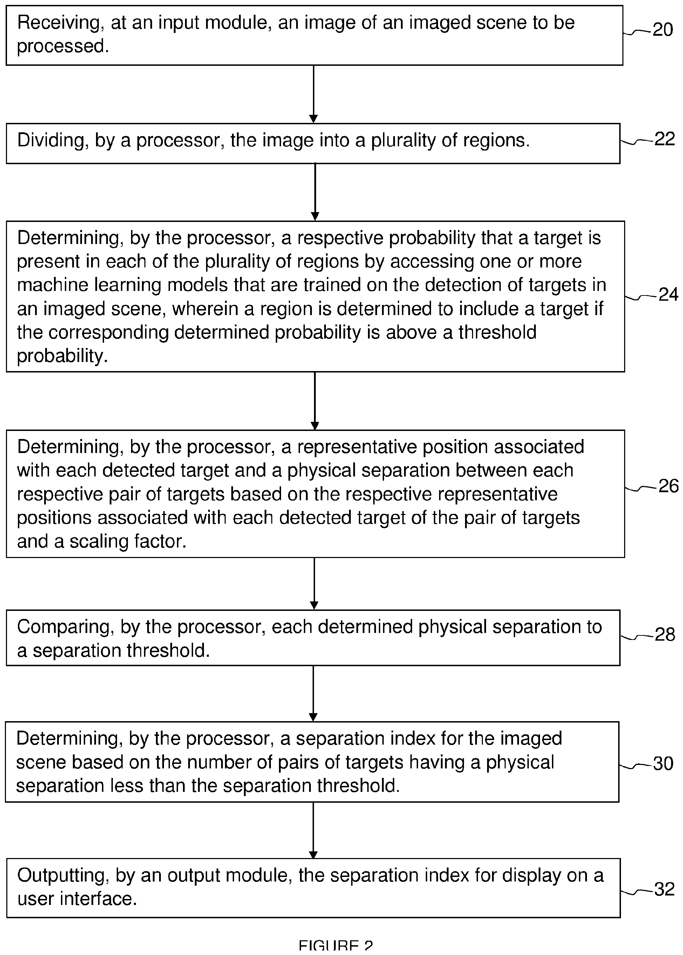

As shown in Figure 1, the apparatus 10 may comprise an input module 12, a processor 14, one or more machine learning models 16, and an output module 18. Figure 2 illustrates a flowchart of a method for determining a separation index for targets in an imaged scene using the apparatus 10 of Figure 1 according to a second aspect of the present disclosure.

In a first step 20, the apparatus receives one or more images of a scene to be processed at the input module 12. The imaged scene includes targets (such as airport passengers or other individuals that pass through the imaged scene) to be identified and the distance therebetween measured. These images may be in the form of still images, or alternatively may be frames from a video, or other moving image series.

The received perspective images are then processed to identify the desired targets using a machine learning model that has been trained on the detection of targets in an imaged scene. In one embodiment of the disclosure, the target identification is achieved by applying a single neural network that divides the image into a plurality of regions and then determines the probability of a target (for example a passenger or member of staff) being present within each region, as set out in steps 22 and 24. A region may be determined to include a target if the probability of a target is above a given threshold. One example machine learning model for this purpose may be a convolutional neural network model.

Each region may in turn be divided into a plurality of sub-regions with the probability of a target being present within each sub-region being determined by the neural network. In this example, the region may be determined to include a target if the aggregated probabilities from a plurality of nearest neighbour sub-regions is determined to be above the given threshold probability.

Where a target is identified based on the threshold, the target will be marked in the image with a bounding box and a corresponding probability for the determination. If multiple bounding boxes are selected, post-processing algorithms may optionally be used to merge bounding boxes that have regions that overlap each other by more than a given threshold so as to result in one bounding box where the overlapping regions may be deemed to relate to the same target. An example of such post-processing algorithms for determining whether to merge neighbouring bounding boxes is a non-maximum suppression algorithm. Other pre-processing methods may also be performed on the received images, such as image resizing, colour enhancement, and illumination enhancement.

The bounding box may be a rectangle that can be defined by the x and y coordinates of a pair of opposing corners of the rectangle, e.g. the upper-left corner and the lower-right corner. The probability associated with each bounding box can then be associated with the box as a weighting. In an alternative embodiment, the bounding boxes may be set to have a fixed size, in which case the bounding box can be defined by a single pair of (x,y) coordinates, for example in a given corner of the bounding box or at its centre.

In such a case where the camera view is not a top-down or bird's eye view, each input / received image is preferably transformed into a corresponding top-down view. This is achieved by using traditional algorithmic image processing techniques. For example, a plurality of key points that are visible in the perspective view may be identified along with a known positional relationship between the plurality of key points. The real distance between each of the key points is preferably also known. By assuming that the individuals in each input image are located on the same flat ground plane as the key points (e.g. the floor of the scene), a mapping / transform can be derived that enables the position of the individuals in a given perspective image to be transformed into the position of that individual in a corresponding top-down view. By using the known real distance between the key points, the mapping / transformed positions can be calibrated with a scale factor such that the real absolute position of the individual can be determined.

In the example where the key points are on the ground plane of the floor of the scene, which the individuals will be assumed to be walking on, the transformation will preferably be applied to a point of each bounding box that is also in that ground plane, e.g. the bottom-centre point of each bounding box, for determining their absolute position in the top-down view.

Once the absolute position in the top-down view has been determined for each individual in the imaged scene, the Euclidian distance between respective pairs of individuals can be determined and each compared to a threshold separation distance to identify which / the number of targets are associated with a Euclidian distance / physical separation that is less than the threshold separation. This is set out in step 26 of the flowchart of Figure 2. The threshold separation may be configured to be equal to the recommended minimum separation distance for individuals in the imaged scene.

In one embodiment, the plurality of key points may be a set of four key points that are visible in the perspective view and can be mapped to the corners of a rectangle in the desired corresponding top-down view. Preferably, these four points will be present on a single surface, for example the floor, and depict the vertices of the rectangle. It will be appreciated that alternative regular two dimensional shapes of known size could be used instead, for example other rhomboid shapes or quadrilaterals. Furthermore, it will be appreciated that shapes with three key points, or more than four key points, may alternatively be used in line with the teaching of the present disclosure.

Once the physical separation between a pair of targets has been determined by the method and apparatus in step 26, this can be compared to a separation threshold in step 28. This separation threshold may relate to a social distancing guideline in operation in the scene being imaged, for example. This process can be repeated for all of the targets in the imaged scene, and then at step 30 a separation index for the imaged scene based on the number of targets having a physical separation that is less than the separation threshold. The separation index is then output by the output module 18 for display on a user interface.

The separation index may be calculated for a given point in time, or averaged over a moving time window, as the total number of targets / individuals within the imaged scene that have a determined separation (from at least one other target / individual) that is less than the threshold separation, or the scaled number of targets / individuals within the imaged scene that have a determined separation (from at least one other target / individual) that is less than the threshold separation when scaled by the size of the imaged area. Alternatively or additionally, the separation index may be calculated for a given point in time, or averaged over a moving time window, as the percentage of the of targets / individuals within the imaged scene that have a determined separation (from at least one other target / individual) that is less than the threshold separation, or as the percentage of the area of the imaged scene that includes targets that have been determined to have a separation (from at least one other target / individual) that is less than the threshold separation.

Where the received images are obtained by the input module 12 from a video source, the streaming video may for example be decoded and decompressed and then still images may be taken from the video every 2 seconds. Alternatively, the rate, frequency or timing of the still images taken from a video source could be adaptive based on motion detection - e.g. a second still may not be taken until it has been determined that the image has changed. This may be particularly helpful for areas that may be unused for extended periods of time, such as boarding gate areas.

The above approach may be refined to take into consideration groups of individuals that do not need to be distanced from each other within the guidelines in place, for example the individuals may be from one family unit or household. Through detecting the position / location of targets in the imaged scene using the above approach, and repeating for successive images of the imaged scene, it can be determined whether the individuals remain within a specified distance from each other throughout the successive images. If the individuals are determined to maintain within the close specified distance from each other over a certain length of time then they may be determined to be a group of individuals that are not required to be distanced from each other and as such the distance between individuals in the group may be excluded from the calculated separation indexes.

The determination of the probability of the presence of an individual in the regions in this manner can also be used to determine indexes of the density of individuals in the imaged scene. In the first step, the above convolutional neural network produces an accurate estimation of the number of individuals present in the imaged scene. Then these density indexes may be calculated for a given point in time, or averaged over a moving time window, as the total number of individuals within the imaged scene, the number of individuals within the imaged scene per unit of area (of the ground plane) of the imaged scene, or the flow count of individuals identified in the imaged scene.

The determined density index may be visually displayed in the form of a density heat map. This approach is particularly suited to the image processing of images of a large imaged scene that would be expected to include a large number of individuals. Furthermore, to overcome any scale or image perspective issues that might degrade the accuracy of the individual detection / counting algorithm, the received images may optionally be input into the convolutional neural network multiple times at different scales respectively, with the determined count of individuals being taken to be the mean of the counts determined for the differently scaled images.

Each of the separation indexes and density indexes described above have been determined in relation to an image or successive images of a single imaged scene. A larger area, such as a large room or a network of different rooms in a larger site (such as an airport, or particular regions thereof), may be covered by a plurality of image sources directed at different areas. It may be desired to combine the respective index of the same type across these different areas and this may be achieved by using a weighted average of the respective indexes determined for the respective areas. The weighting may be as a factor of the relative size / volume of the respective areas, or alternatively it may depend on other factors, such as the relative importance of the respective areas.

Preferably, the different areas would be non-overlapping so that the indexes computed for one area are independent from those of another area. In the context of images of individuals moving around an airport, this would mean that a single person should not contribute to the same index in multiple different areas at the same point in time, although the individual may of course be detected in different areas at subsequent points in time. This could be achieved by ensuring that the sets of received images corresponding to the different areas do not overlap, or alternatively any overlapping areas could be masked out of one of the sets of received images. Alternatively, further processing could be carried out on the determined indexes to mitigate the impact of such double counting by using tracking of individuals and re-identification of the individuals between the different sets of received images.

In addition to the indexes being output by the output module 18 for display on a user interface, in some embodiments automated actions may be taken based on the determined indexes. For example, where the determined indexes indicate congestion in the area of the imaged scene, the output module may be further configured to cause routing guidance messages to be displayed to individuals in the area, or those on route to the area. This could be used to try and manage the congestion of individuals in the imaged area and any resulting lack of separation between the individuals in that area. These congestion events could be identified based on thresholds configured for the given area in question.

### Model Training

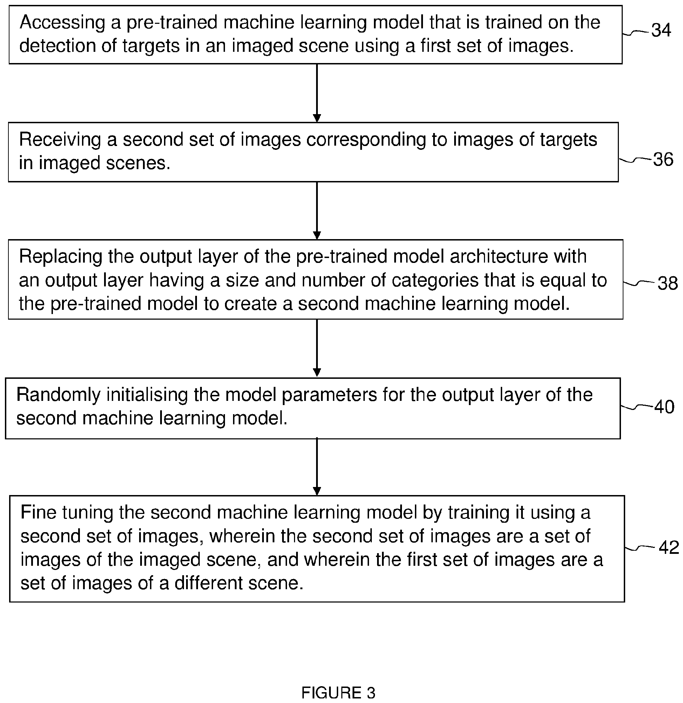

In the above description, the apparatus makes use of one or more machine learning models that have been trained on the detection of targets in an imaged scene. In one embodiment, the machine learning models may be a pre-trained model that has been trained to detect targets in a generic imaged scene. In further optional embodiments, this pre-trained model may be refined by further training the model with a specialised training data set, as illustrated in the flowchart of Figure 3.

The model refinement or fine-tuning is based on an assumption that, by using training data that is specific to end usage environment and scene to be imaged and processed, the generic pre-trained model could be refined to an optimal accuracy being tailored to the end usage environment while still making use of a larger pool of generic images in the training process.

In step 34, the method for training the one or more machine learning models begins by accessing a pre-trained machine learning model that is trained on the detection of targets in an imaged scene using a first set of images and then receiving a second set of images corresponding to images of targets in imaged scenes in step 36. The first set of images are the images that were used to originally train the pre-trained model and may be considered to be a generic set of images in the sense that they are not specific to the environment of the imaged scene to ultimately be processed.

At step 38, the method replaces the top / output layer of the pre-trained model architecture with an output layer having a size and number of categories that is equal to the pre-trained model to create a second machine learning model that otherwise inherits the same model architecture as the pre-trained model. In some embodiments, the output layer of the second machine learning model may be a fully convolutional layer, even if the output layer of the pre-trained machine learning model was not.

At step 40, the model parameters for the output layer of the second machine learning model are randomly initialised and then at step 42 the second machine learning model is fine-tuned by training it using the second set of images corresponding to images of targets in imaged scenes corresponding to the end usage environment. This second set of images will preferably have been cleaned, annotated and validated in preparation for being used to train the second machine learning model. With the fine-tuning training, the randomised initialisation of the state means that the parameters of the output layer are updated from scratch, while the parameters for the other layers are updated from the state of the pre-trained model. Optionally, the parameters of one or more of the other layers (e.g. the lower base layers) may fixed after the training based on the first set of images such that the fine-tuning training process only updates one or more of the top layers.

For example, the second set of images may correspond to training data collected from the airport that the machine learning model is to be implemented at, whereas the first set of images may correspond to data collected from a different airport, a plurality of different airports, or even non-airport environments. This means that the higher-order features of the model can specialise to the specific airport environment more easily than would otherwise be possible. It will be appreciated that, in some circumstances, the machine learning model to be used may be trained from scratch on training data of a set of images data collected from the airport that the machine learning model is to be implemented at, but that this process may be more time and resource intensive.

### Detection of Personal Protective Equipment

The advanced machine learning, computer vision and data science tools of the present invention may also be applied to input images to make a determination of the probability that detected individuals (such as airport passengers or airport staff members) are wearing personal protective equipment (PPE), such as face coverings or face masks. In order to determine whether a face covering is being worn, the process may be split into a first step of identifying a target area / region of interest (i.e. identifying individuals in an imaged scene and in particular identifying their facial areas where a face covering might be expected to be present), and then a second step of classifying the identified region of interest with the binary classification of either having a face covering present or not (i.e. the absence of a face covering).

Separate machine learning models may be targeted at and trained for each of these steps; however, both machine learning models may take the form of neural network models. Individuals may be identified in the input images using the machine learning methods described above, or alternative another known method may be used. The detection of the facial region of interest may also be achieved using known machine learning models and image processing.

Once the facial region of interest has been identified, a specifically designed neural network model may be used to produce the binary classification output of the presence or absence of a face covering in the identified facial region of interest. In order to train this specifically designed neural network model for producing this binary classification, it is necessary to prepare a relevant training data set of images to be input into the model during training. It will be appreciated that images for such data sets may not be particularly prevalent, since usage of such face coverings has typically not been widespread in the past.

In order to overcome this issue, the inventors have appreciate that it can be advantageous to form the training data set out of the combination of a number of real world images of individuals wearing a face covering, a number of real world images of individuals not wearing a face covering, and a number of synthetic images of individuals wearing a face covering. These synthetic images of individuals wearing a face covering may be obtained by starting from a real world image of one or more individuals no wearing a face covering, and then digitally adding a face covering to the facial region of one or more individuals in the image at the correct perspective, orientation, and scale etc.

This augmentation of the training data may be achieved by using a generative adversarial network (GAN) to generate these synthetic / digital masks and to overlay them on the existing facial regions in the input images. The digital mask will need to be aligned with the face using a number of key points detected by the facial detection models, which may be any known model as outlined above.

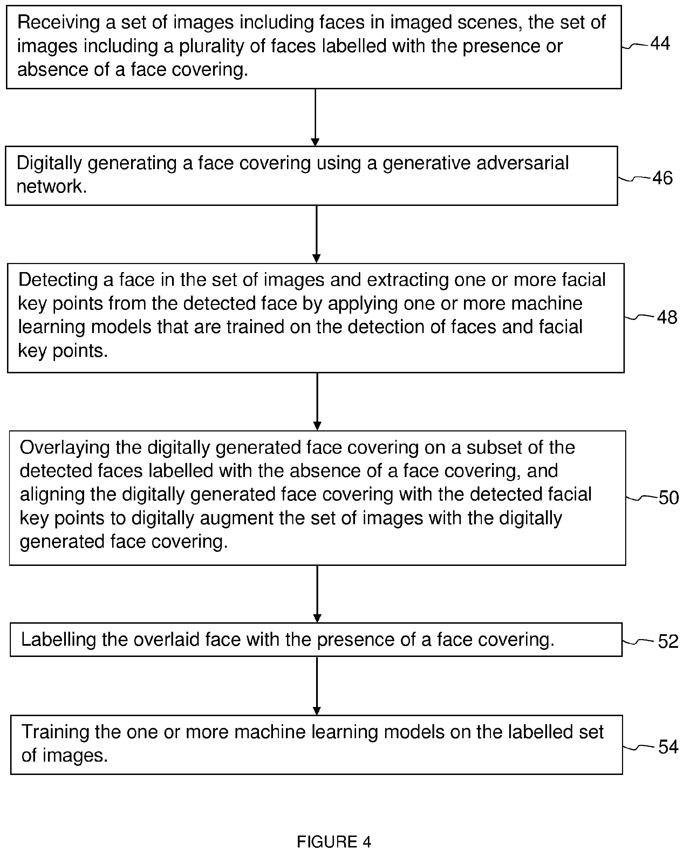

This method of training data set augmentation and machine learning model training is also set out in Figure 4. At step 44, a set of images including faces in imaged scenes is received, with the set of images including a plurality of faces labelled with the presence or absence of a face covering. Further face coverings are then digitally generated using a generative adversarial network in step 46. These digitally generated face coverings may be individual face covering templates with transparent backgrounds.

In step 48, a face is detected in the set of images and one or more facial key points corresponding to the detected face are extracted by applying one or more machine learning models trained on the detection of faces and facial key points. These facial key points may correspond to facial components such as an ear, nose, jaw, left eye, right eye, etc. Then in step 50 a digitally generated face covering is overlaid on one of the detected faces that is labelled with the absence of a face covering, and the digitally generated face covering is aligned with the detected facial key points to digitally augment the detected face with the presence of a facial covering. The aligning process uses standard computer vision algorithms to iteratively align the key points from the facial region of interest in the image and the face covering template until an alignment match threshold is reached. Optionally, this automated alignment can be verified manually to ensure that the overlay looks natural without introducing too many visual artefacts.

At step 52, the face overlaid with a digitally generated face covering is then labelled with the presence of a face covering instead of the absence of one. The above process may then be repeated for further detected faces that are labelled with the absence of a face covering until the proportion of faces in the training data set being labelled with the presence of a face covering has been increased to a desired level. Once such a desired level has been achieved, the one or more machine learning models for classifying the presence or absence of a face covering on faces in an imaged scene may be trained on the augmented training data set as set out in step 54.

In this manner, the one or more machine learning models can be specifically trained for the desired purpose. A further advantage of this method is that the images of the training data set being augmented may be specific to the environment in which the trained machine learning models are to be ultimately used, e.g. the particular airport that the apparatus is being implemented at. This results in an improved model that can be trained more effectively with more data.

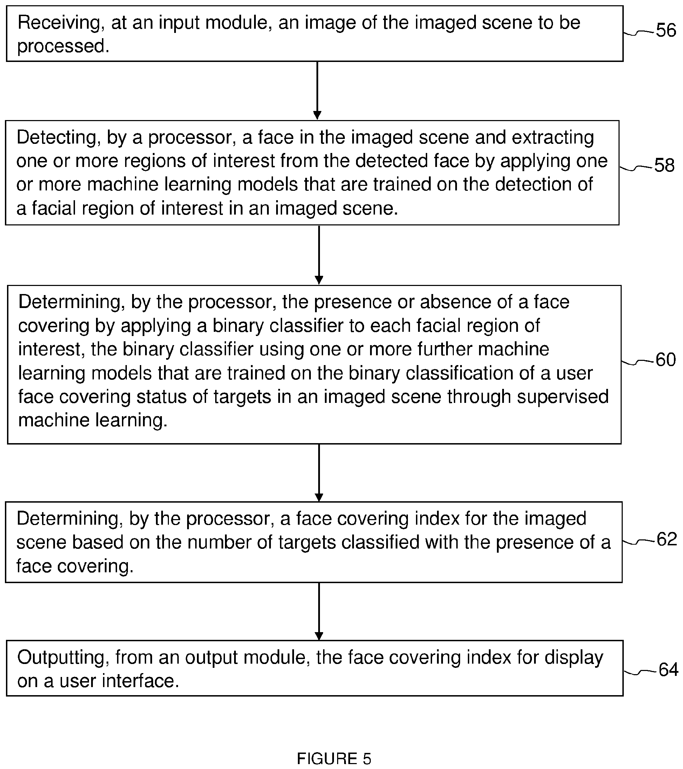

The trained machine learning models can then be used to process new images to identify facial regions of interest and to then classify these regions of interest with the presence or absence of a face covering. This process is set out in Figure 5, in which the method starts at step 56 by receiving an image of the imaged scene to be processed at the input module 12. In step 58, a face is detected in the imaged scene by the processor 14 and one or more regions of interest are extracted from the detected face. This step is achieved by applying one or more machine learning models that are trained on the detection of a facial region of interest in an imaged scene and may be one of a number of known machine learning models and image processing methods.

At step 60, the processor 14 detects the presence or absence of a face covering by applying the trained machine learning model discussed above to perform a binary classification of each facial region of interest and determine the face covering status of targets in the imaged scene.

Based on the face covering status of the targets in an imaged scene, the processor determines a corresponding face covering index for the imaged scene at step 62. This face covering index may be calculated for a given point in time, or averaged over a moving time window, as the number of targets classified with the presence of a face covering in the imaged scene, the number of targets per unit of area (of the ground plane) within the imaged scene that are classified with the presence of a face covering, or the percentage of targets that are classified with the presence of a face covering (in comparison to those classified with the absence of a face covering). It will be appreciated that these indexes could also be reversed such that they relate to those classified with the absence of a face covering instead of the presence of a face covering. Then at step 64, the output module 18 outputs the face covering index for display on a user interface.

The images of the imaged scene received by the apparatus are preferably captured from image devices that are configured to capture front on views of the targets, preferably with a frontal face view / full body visibility of the targets, so that the front of the targets facial area can be captured by the image device. As such, it is preferable to orient the image devices / cameras towards the targets where the targets would be expected to be heading towards the image device.

### Index Dashboard

Through the above methods and apparatus', the present disclosure provides advanced machine learning, computer vision and data science tools to analyse real-time video streams from image / video sources to detect the distance individuals are keeping from each other and the use of face coverings. This presents a non-intrusive approach that monitors physical distancing, face covering wearing, crowd density and enables this data and corresponding indexes to be displayed as a data dashboard on a user interface. These indexes are computed to provide real-time statistical measures about safe crowd density, safe distancing, and face covering / PPE usage from each scene that is imaged. These measures can then be monitored in order to provide efficient and accurate resource allocation / enable precautionary measures to be undertaken.

In addition to the indexes being output by the output module 18 for display on a user interface, in some embodiments automated actions may be taken based on the determined indexes. For example, where the determined indexes indicate congestion in the area of the imaged scene, the output module may be further configured to cause routing guidance messages to be displayed to individuals in the area, or those on route to the area. This could be used to try and manage the congestion of individuals in the imaged area and any resulting lack of separation between the individuals in that area.

Further actions may include sending airport employees that are equipped with additional protection equipment or otherwise providing additional PPE equipment for use by existing employees, installing additional hand sanitisers / distributing face masks in the areas of highest need, installing additional temperature screening equipment for processing passengers, or increasing the frequency of cleaning services in affected areas.

A sanitisation index may be defined for a larger area, such as an entire airport covered by a plurality of different cameras, to be a heat map normalised across all camera locations that combines metrics of the proportion of individuals that do not maintain the threshold separation between themselves and other individuals, the accumulated crowd density over time; the duration of time that an individual that does not maintain the threshold separation between themselves and other individuals continues to occupy a given area, and the frequency at which the imaged scene or scenes are sanitised / cleaned.

The metrics regarding the frequency of sanitisation for a given scene or scenes may be based on data, such as airport operational data received from a data source, that indicates when the imaged scene was last sanitised / cleaned. This data source may be an airport management system or similar database.

In addition, the data may be represented graphically, using charts or maps showing the indexes using colour coding / heat maps to convey the relevant information. For example, different colours on a map of an area could be used to indicate different numbers or percentages of individuals falling below the recommended minimum separation distance set by the threshold within respective portions of the mapped area. This could identify hot spots where individuals have not been adhering to social distancing / not wearing face coverings.

The graphical display / user interface may comprise a real-time (or at least near real-time) view of each index and any recent trends, such as whether the respective indexes have recently been increasing or decreasing. This can be used to give users alerts so that they can proactively monitor the situations and make relevant decisions as and when needed. This may be alongside automated decision making such as that set out above. Additionally or alternatively, the graphical display / user interface may comprise a historical view of the indexes, for example using time series data for each index to indicate what has happened in the past and optionally giving users a playback option to statistically review the indexes at a given point in the past and/or how they have evolved over a certain timeframe.

When considered at a higher scale, covering multiple public spaces, potentially in multiple jurisdictions / countries, epidemic modelling and air transportation graph theory may be applied with the ingestion of multiple global scheduled flight data, epidemic data, and third-party date sources, for example to identify a set of multi-airport level health-related risk predictions as well as a granular risk ranking for each flight route in both the short-term and the long term based on the dynamic spreading patterns of the contagious pathogen.

According to another aspect of the present disclosure, the likelihood of high-risk airports and high-risk travel routes for arriving travellers is identified in the multi-airport level model based on daily disease generations and the proposed measures of physical distancing compliance. The likelihood of high-risk airports and the high-risk travel routes for arriving travellers may be based on the measured impact of physical distancing and face covering wearing status on the spreading of the contagious pathogen in these areas / airports.

These risk assessments require an understanding of the dynamic spreading patterns of the pathogen. In order to simulate global outbreak dynamics, a meta-population model based on the global network may be employed that connects passenger air travel between cities. The global network may be represented by a graph *G* = (*V,E*) where V is a set of nodes representing airports / cities and E is a set of directed edges representing passenger travel routes / traffic flux (possibly including stopovers) among cities. At each node of the global network, outbreak dynamics may be modelled using a compartmental model. The foundation of the model may be a worldwide air transportation network that connects around 4000 nodes (airports) with more than 50000 edges (flight routes).

The inputs of the model include: the number of confirmed cases / deaths / recovered cases / active cases, the population density, and transportation and passenger data. The outputs of the model are the basic reproduction number (the average number of people who will catch the contagious disease from one contagious person), and the force of infection (the rate of becoming infected).

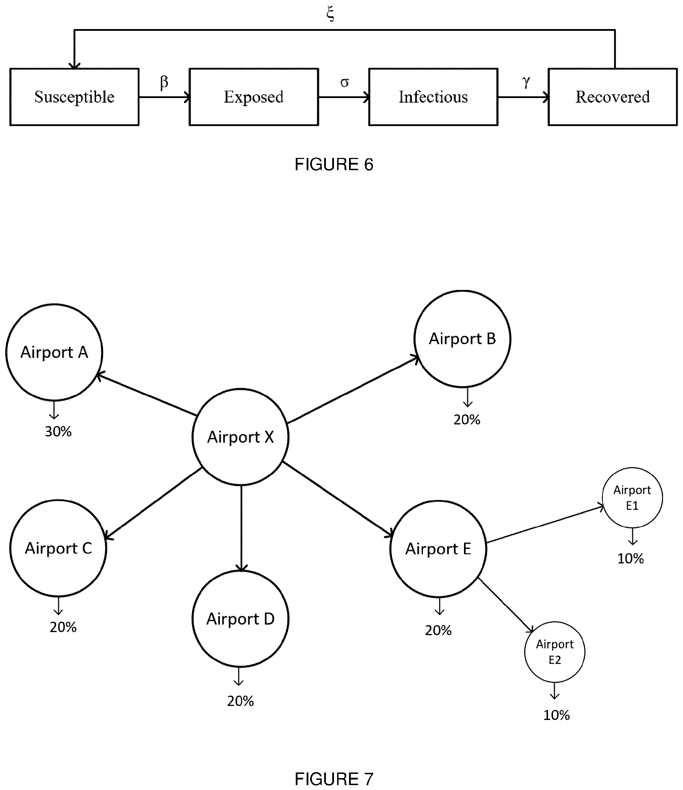

A schematic diagram of the epidemiological model employed in this analysis is illustrated in Figure 6. The epidemiological model computes the theoretical number of people infected with a contagious illness in a closed population over time while considering the incubation period where β is infectious rate which represents the probability of transmitting disease between a susceptible and an infectious individual, σ is the rate at which an exposed person becomes infective, and γ is the recovery rate that is determined by the average duration of infection. This parameter expresses how much the disease can be recovered in a specific period.

The present model assumes that the population is fixed, i.e. the only way a person can leave the susceptible group is to be exposed and become infected, and the only way a person can leave the infected group is to recover from the disease. Once a person has recovered, the person may optionally be considered to have received immunity. Age, sex, social status, and race are not considered to affect the probability of being infected, and the members of the population are assumed to mix homogeneously.

Another aspect of the present disclosure provides a relative ranking of importation risk posed to each airport and identifies the highest risk travel routes of connecting airports. Figure 7 illustrates a schematic diagram of the multi-airport level risk assessment model, in particular that if an infected individual boards a plane at airport A in an affected region, the relative import risk *P*(*B*|*A*) at airport B quantifies the probability that airport B is the final destination for that individual (irrespective of non-direct travel routes).

Some ancillary benefits of the present disclosure are that the awareness of individuals in the environment being monitored of the metrics and guidance can be raised and confidence in the effectiveness of this guidance can in turn be improved.

For completeness, it is noted that the flowcharts of Figures 2 to 5 illustrate the operation of an example implementation of methods according to the present disclosure. Each block in the flowcharts may represent a module comprising one or more executable computer instructions, or a portion of an instruction, for implementing the relevant logical function specified in the block. The order of blocks in the Figures is only intended to be illustrative of an example. In alternative implementations, the logical functions illustrated in particular blocks may occur out of the order noted in Figures. For example, the processes associated with two blocks may be carried out simultaneously or, depending on the functionality, in the reverse order. Moreover, each block in the flowchart may be implemented in software, hardware or a combination of software and hardware.

As will be appreciated by the skilled person, the subject matter described herein may be embodied in whole or in part as a method, a system, or a computer program product including computer readable instructions. Accordingly, the subject matter of the present disclosure may take the form of an entirely hardware embodiment, an entirely software embodiment, or an embodiment combining software, firmware, hardware and/or any other suitable approach or apparatus.

Any computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Embodiments of the present disclosure can be described with reference to the following numbered clauses, with preferred features laid out in the dependent clauses:
Clause 1. An apparatus for determining a separation index for targets in an imaged scene, the apparatus comprising: one or more machine learning models that are trained on the detection of targets in an imaged scene; an input module configured to receive an image of the imaged scene to be processed; a processor configured to divide the image into a plurality of regions; the processor configured to determine a respective probability that a target is present in each of the plurality of regions by accessing the one or more machine learning models, wherein a region is determined to include a target if the corresponding determined probability is above a threshold probability; the processor configured to determine a representative position associated with each detected target; the processor configured to determine a physical separation between each respective pair of targets based on the respective representative positions associated with each detected target of the pair of targets and a scaling factor; and the processor configured to compare each determined physical separation to a separation threshold and to determine a separation index for the imaged scene based on the number of pairs of targets having a physical separation less than the separation threshold; and an output module configured to output the separation index for display on a user interface.
Clause 2. The apparatus of clause 1, wherein determining the representative position associated with each detected target comprises determining a position of each target according to the perspective of the image, and translating this position to the representative position of the detected target according to a birds-eye perspective corresponding to the imaged scene using a transform.
Clause 3. The apparatus of clause 2, wherein the processor is further configured to determine the transform based on a set of key points in the imaged scene having a known relationship to one another.
Clause 4. The apparatus of any of clauses 1 to 3, wherein the one or more machine learning models comprise a trained convolutional neural network having convolutional layers; and wherein the processor is configured to determine the respective probability that a target is present in each of the plurality of regions by accessing the trained convolutional neural network.
Clause 5. The apparatus of any of clauses 1 to 4, wherein the processor is configured to determine a separation index comprising one or more of: a number of targets having an associated physical separation that is less than the separation threshold, a percentage of the detected targets having an associated physical separation that is less than the separation threshold, a number of targets having an associated physical separation that is less than the separation threshold as a function of the total area of the imaged scene, a percentage of the image corresponding to detected targets having an associated physical separation that is less than the separation threshold, a total number of detected targets, or a density of targets in the area of the imaged scene.
Clause 6. The apparatus of clause 5, wherein the image corresponds to a moment in time and wherein the input module is configured to receive a plurality of further images corresponding to subsequent moments in time; and wherein one or more of the separation indices is averaged over a plurality of images corresponding to a moving time window.
Clause 7. The apparatus of clause 6, wherein the processor is further configured to determine whether a given pair of detected targets has an associated physical separation that is less than the separation threshold for more than a threshold time period and, if so, to identify the given pair of detected targets as a target group; wherein the separation index is not based on the physical separation between respective targets of a target group.
Clause 8. The apparatus of any of clauses 1 to 7, wherein the input module is configured to receive images of a plurality of different imaged scenes; wherein the processor is configured to determine a separation index for each of the different imaged scenes; and wherein the processor is configured to determine a global separation index based on a weighted average of the separation indices for each of the different imaged scenes.
Clause 9. The apparatus of any of clauses 1 to 8, wherein the targets are people in the imaged scene; and wherein the output module is further configured to cause routing guidance messages to be displayed to people in, or heading towards, the imaged scene in order to reduce congestion in the imaged scene, wherein the routing guidance depends on the determined separation index.
Clause 10. A computer implemented method for determining a separation index for targets in an imaged scene, the method comprising: receiving, at an input module, an image of an imaged scene to be processed; dividing, by a processor, the image into a plurality of regions; determining, by the processor, a respective probability that a target is present in each of the plurality of regions by accessing one or more machine learning models that are trained on the detection of targets in an imaged scene, wherein a region is determined to include a target if the corresponding determined probability is above a threshold probability; determining, by the processor, a representative position associated with each detected target and a physical separation between each respective pair of targets based on the respective representative positions associated with each detected target of the pair of targets and a scaling factor; comparing, by the processor, each determined physical separation to a separation threshold; determining, by the processor, a separation index for the imaged scene based on the number of pairs of targets having a physical separation less than the separation threshold; and outputting, by an output module, the separation index for display on a user interface.
Clause 11. The computer implemented method of clause 10, wherein determining the representative position associated with each detected target comprises determining a position of each target according to the perspective of the image, and translating this position to the representative position of the detected target according to a birds-eye perspective corresponding to the imaged scene using a transform.
Clause 12. The computer implemented method of clause 11, wherein the processor determines the transform based on a set of key points in the imaged scene having a known relationship to one another.
Clause 13. The computer implemented method of any of clauses 10 to 12, wherein the one or more machine learning models comprise a trained convolutional neural network having convolutional layers; and wherein the method comprises determining the respective probability that a target is present in each of the plurality of regions by accessing the trained convolutional neural network.
Clause 14. The computer implemented method of any of clauses 10 to 13, the method comprising determining, by the processor, a separation index comprising one or more of: a number of targets having an associated physical separation that is less than the separation threshold, a percentage of the detected targets having an associated physical separation that is less than the separation threshold, a number of targets having an associated physical separation that is less than the separation threshold as a function of the total area of the imaged scene, a percentage of the image corresponding to detected targets having an associated physical separation that is less than the separation threshold, a total number of detected targets, or a density of targets in the area of the imaged scene.
Clause 15. The computer implemented method of clause 14, wherein the image corresponds to a moment in time and wherein the input module is configured to receive a plurality of further images corresponding to subsequent moments in time; and wherein one or more of the separation indices is averaged over a plurality of images corresponding to a moving time window.
Clause 16. The computer implemented method of clause 15, further comprising determining, by the processor, whether a given pair of detected targets has an associated physical separation that is less than the separation threshold for more than a threshold time period and, if so, identifying the given pair of detected targets as a target group; wherein the separation index is not based on the physical separation between respective targets of a target group.
Clause 17. The computer implemented method of any of clauses 10 to 16, wherein the input module is configured to receive images of a plurality of different imaged scenes; and the method further comprises determining, by the processor, a separation index for each of the different imaged scenes and a global separation index based on a weighted average of the separation indices for each of the different imaged scenes.
Clause 18. The computer implemented method of any of clauses 10 to 17, wherein the targets are people in the imaged scene; and the method further comprises causing, by the output module, routing guidance messages to be displayed to people in, or heading towards, the imaged scene in order to reduce congestion in the imaged scene, wherein the routing guidance depends on the determined separation index.
Clause 19. A computer implemented method for training one or more machine learning models, comprising an artificial neural network, to detect targets in an imaged scene, the method comprising: receiving a second set of images corresponding to images of targets in imaged scenes; accessing a pre-trained machine learning model that is trained on the detection of targets in an imaged scene using a first set of images; replacing the output layer of the pre-trained model architecture with an output layer having a size and number of categories that is equal to the pre-trained model to create a second machine learning model; randomly initialising the model parameters for the output layer of the second machine learning model; and fine tuning the second machine learning model by training it using a second set of images; wherein the second set of images are a set of images of the imaged scene, and wherein the first set of images are a set of images of a different scene.
Clause 20. The computer implemented method of clause 19, wherein the output layer of the model architecture is a fully convolutional layer.
Clause 21. An apparatus for determining a user face covering index for targets in an imaged scene, the apparatus comprising: one or more machine learning models that are trained on the detection of a facial region of interest in an imaged scene; one or more further machine learning models that are trained on the binary classification of a user face covering status of targets in an imaged scene; an input module configured to receive an image of the imaged scene to be processed; a processor configured to detect a face in the imaged scene and to extract one or more regions of interest from the detected face by applying the one or more machine learning models, configured to apply a binary classifier to each facial region of interest to determine the presence or absence of a face covering by applying the one or more further machine learning models to the facial region of interest of the received image, and configured to determine a face covering index for the imaged scene based on the number of targets classified with the presence of a face covering; and an output module configured to output the face covering index for display on a user interface.
Clause 22. The apparatus of clause 21, wherein the face covering index corresponds to a percentage of targets in the imaged scene classified with the presence of a face covering.
Clause 23. A computer implemented method for determining a user face covering index for targets in an imaged scene, the method comprising: receiving, at an input module, an image of the imaged scene to be processed; detecting, by a processor, a face in the imaged scene and extracting one or more regions of interest from the detected face by applying one or more machine learning models that are trained on the detection of a facial region of interest in an imaged scene; determining, by the processor, the presence or absence of a face covering by applying a binary classifier to each facial region of interest, the binary classifier using one or more further machine learning models that are trained on the binary classification of a user face covering status of targets in an imaged scene through supervised machine learning; determining, by the processor, a face covering index for the imaged scene based on the number of targets classified with the presence of a face covering; and outputting, from an output module, the face covering index for display on a user interface.
Clause 24. The computer-implemented method of clause 23, wherein the face covering index corresponds to a percentage of targets in the imaged scene classified with the presence of a face covering.
Clause 25. A computer implemented method for training one or more machine learning models, comprising an artificial neural network, to classify the presence or absence of a face covering on faces in an imaged scene, the method comprising: receiving a set of images including faces in imaged scenes, the set of images including a plurality of faces labelled with the presence or absence of a face covering; augmenting the set of images to digitally add a face covering to a subset of the targets that are labelled with the absence of a face covering by: digitally generating a face covering using a generative adversarial network; detecting a face in the set of images and extracting one or more facial key points from the detected face by applying one or more machine learning models that are trained on the detection of faces and facial key points; overlaying the digitally generated face covering on the detected face and aligning the digitally generated face covering with the detected facial key points; and labelling the overlaid face with the presence of a face covering; and training the one or more machine learning models on the labelled set of images.

## Claims

1. An apparatus for determining a separation index for targets in an imaged scene, the apparatus comprising:
one or more machine learning models that are trained on the detection of targets in an imaged scene;
an input module configured to receive an image of the imaged scene to be processed;
a processor configured to divide the image into a plurality of regions; the processor configured to determine a respective probability that a target is present in each of the plurality of regions by accessing the one or more machine learning models, wherein a region is determined to include a target if the corresponding determined probability is above a threshold probability; the processor configured to determine a representative position associated with each detected target; the processor configured to determine a physical separation between each respective pair of targets based on the respective representative positions associated with each detected target of the pair of targets and a scaling factor; and the processor configured to compare each determined physical separation to a separation threshold and to determine a separation index for the imaged scene based on the number of pairs of targets having a physical separation less than the separation threshold; and
an output module configured to output the separation index for display on a user interface.

2. The apparatus of claim 1, wherein determining the representative position associated with each detected target comprises determining a position of each target according to the perspective of the image, and translating this position to the representative position of the detected target according to a birds-eye perspective corresponding to the imaged scene using a transform; preferably wherein the processor is further configured to determine the transform based on a set of key points in the imaged scene having a known relationship to one another.

3. The apparatus of any of claims 1 to 2, wherein the one or more machine learning models comprise a trained convolutional neural network having convolutional layers; and wherein the processor is configured to determine the respective probability that a target is present in each of the plurality of regions by accessing the trained convolutional neural network.

4. The apparatus of any of claims 1 to 3, wherein the processor is configured to determine a separation index comprising one or more of: a number of targets having an associated physical separation that is less than the separation threshold, a percentage of the detected targets having an associated physical separation that is less than the separation threshold, a number of targets having an associated physical separation that is less than the separation threshold as a function of the total area of the imaged scene, a percentage of the image corresponding to detected targets having an associated physical separation that is less than the separation threshold, a total number of detected targets, or a density of targets in the area of the imaged scene.

5. The apparatus of claim 4, wherein the image corresponds to a moment in time and wherein the input module is configured to receive a plurality of further images corresponding to subsequent moments in time; and wherein one or more of the separation indices is averaged over a plurality of images corresponding to a moving time window.

6. The apparatus of claim 5, wherein the processor is further configured to determine whether a given pair of detected targets has an associated physical separation that is less than the separation threshold for more than a threshold time period and, if so, to identify the given pair of detected targets as a target group; wherein the separation index is not based on the physical separation between respective targets of a target group.

7. The apparatus of any of claims 1 to 6, wherein the input module is configured to receive images of a plurality of different imaged scenes; wherein the processor is configured to determine a separation index for each of the different imaged scenes; and wherein the processor is configured to determine a global separation index based on a weighted average of the separation indices for each of the different imaged scenes.

8. The apparatus of any of claims 1 to 7, wherein the targets are people in the imaged scene; and wherein the output module is further configured to cause routing guidance messages to be displayed to people in, or heading towards, the imaged scene in order to reduce congestion in the imaged scene, wherein the routing guidance depends on the determined separation index.

9. A computer implemented method for determining a separation index for targets in an imaged scene, the method comprising:
receiving, at an input module, an image of an imaged scene to be processed;
dividing, by a processor, the image into a plurality of regions;
determining, by the processor, a respective probability that a target is present in each of the plurality of regions by accessing one or more machine learning models that are trained on the detection of targets in an imaged scene, wherein a region is determined to include a target if the corresponding determined probability is above a threshold probability;
determining, by the processor, a representative position associated with each detected target and a physical separation between each respective pair of targets based on the respective representative positions associated with each detected target of the pair of targets and a scaling factor;
comparing, by the processor, each determined physical separation to a separation threshold;
determining, by the processor, a separation index for the imaged scene based on the number of pairs of targets having a physical separation less than the separation threshold; and
outputting, by an output module, the separation index for display on a user interface.

10. A computer implemented method for training one or more machine learning models, comprising an artificial neural network, to detect targets in an imaged scene, the method comprising:
receiving a second set of images corresponding to images of targets in imaged scenes;
accessing a pre-trained machine learning model that is trained on the detection of targets in an imaged scene using a first set of images;
replacing the output layer of the pre-trained model architecture with an output layer having a size and number of categories that is equal to the pre-trained model to create a second machine learning model;
randomly initialising the model parameters for the output layer of the second machine learning model; and
fine tuning the second machine learning model by training it using a second set of images;
wherein the second set of images are a set of images of the imaged scene, and wherein the first set of images are a set of images of a different scene.

11. The computer implemented method of claim 10, wherein the output layer of the model architecture is a fully convolutional layer.

12. An apparatus for determining a user face covering index for targets in an imaged scene, the apparatus comprising:
one or more machine learning models that are trained on the detection of a facial region of interest in an imaged scene;
one or more further machine learning models that are trained on the binary classification of a user face covering status of targets in an imaged scene;
an input module configured to receive an image of the imaged scene to be processed;
a processor configured to detect a face in the imaged scene and to extract one or more regions of interest from the detected face by applying the one or more machine learning models, configured to apply a binary classifier to each facial region of interest to determine the presence or absence of a face covering by applying the one or more further machine learning models to the facial region of interest of the received image, and configured to determine a face covering index for the imaged scene based on the number of targets classified with the presence of a face covering; and
an output module configured to output the face covering index for display on a user interface.

13. The apparatus of claim 12, wherein the face covering index corresponds to a percentage of targets in the imaged scene classified with the presence of a face covering.

14. A computer implemented method for determining a user face covering index for targets in an imaged scene, the method comprising:
receiving, at an input module, an image of the imaged scene to be processed;
detecting, by a processor, a face in the imaged scene and extracting one or more regions of interest from the detected face by applying one or more machine learning models that are trained on the detection of a facial region of interest in an imaged scene;
determining, by the processor, the presence or absence of a face covering by applying a binary classifier to each facial region of interest, the binary classifier using one or more further machine learning models that are trained on the binary classification of a user face covering status of targets in an imaged scene through supervised machine learning;
determining, by the processor, a face covering index for the imaged scene based on the number of targets classified with the presence of a face covering; and
outputting, from an output module, the face covering index for display on a user interface.

15. A computer implemented method for training one or more machine learning models, comprising an artificial neural network, to classify the presence or absence of a face covering on faces in an imaged scene, the method comprising:
receiving a set of images including faces in imaged scenes, the set of images including a plurality of faces labelled with the presence or absence of a face covering;
augmenting the set of images to digitally add a face covering to a subset of the targets that are labelled with the absence of a face covering by:
digitally generating a face covering using a generative adversarial network;
detecting a face in the set of images and extracting one or more facial key points from the detected face by applying one or more machine learning models that are trained on the detection of faces and facial key points;
overlaying the digitally generated face covering on the detected face and aligning the digitally generated face covering with the detected facial key points; and
labelling the overlaid face with the presence of a face covering; and training the one or more machine learning models on the labelled set of images.
